# EUROPÄISCHE PATENTANMELDUNG

(11) **EP 4 742 470 A1**
(43) Veröffentlichungstag der Anmeldung: **13.05.2026**
(21) Anmeldenummer: 24212510.2
(22) Anmeldetag: 12.11.2024
(51) Int. Cl.: H02G 1/08, H02G 3/04

(54) **SCHLAUCHVERLEGEVORRICHTUNG, SCHLAUCH-ZUFÜHRVORRICHTUNG, VERFAHREN ZUM VERLEGEN MINDESTENS EINES SCHLAUCHS UND VERFAHREN ZUM ZUFÜHREN MINDESTENS EINES SCHLAUCHS**

(71) Anmelder: Gropyus AG, 1030 Wien (AT)
(72) Erfinder: MANHARTSEDER, Christian, 4691 Schlatt (AT); STRASSMAIR, Michael, 4653 Eberstalzell (AT)
(74) Vertreter: Vossius & Partner Patentanwälte Rechtsanwälte mbB

(57) **Zusammenfassung**

Die Erfindung betrifft eine Schlauchverlegevorrichtung (10) zum Verlegen mindestens eines Schlauchs (12) an mindestens einem Panel (14). Der Schlauch (12) ist zum Aufnehmen von elektrischen Leitungen geeignet. Die Schlauchverlegevorrichtung (10) weist mindestens eine Greifvorrichtung (18) auf, die dazu eingerichtet ist, den Schlauch (12) zu greifen. Die Schlauchverlegevorrichtung (10) weist mindestens eine Bewegungsvorrichtung (22) auf, die dazu eingerichtet ist, die Greifvorrichtung (18) in mindestens eine Richtung (24) zu bewegen, um eine Position des Schlauchs (12) an dem Panel einzustellen.

Die Erfindung betrifft außerdem eine Schlauch-Zuführvorrichtung (80), ein Verfahren zum Verlegen mindestens eines Schlauchs (12) an mindestens einem Panel (14) und ein Verfahren zum Zuführen mindestens eines Schlauchs (12) zu einem Panel (14),

## Beschreibung

Im Gebäudebau werden in der Regel relativ viele Elektroinstallationen, beispielsweise Elektroleitungen, Steckdosen etc., durchgeführt. Im heutigen technischen Entwicklungszustand erfolgen die jeweiligen Elektroinstallationen in der Regel manuell bzw. händisch, in der Regel vor Ort am jeweiligen Gebäude, beispielsweise an einer Baustelle.

Derartige manuelle Prozesse erfordern jedoch qualifizierte und/oder relativ kostenintensive Arbeitskräfte.

Dies führt außerdem zu einem erheblichen Produktionsaufwand und einer relativ geringen Effizienz. Dadurch werden relativ hohe Kosten verursacht.

Des Weiteren sind manuell durchgeführte Montagevorgänge häufig fehleranfällig und/oder weisen häufig eine relativ geringe Montagegenauigkeit bzw. relativ große Abweichungen auf.

Es ist deshalb wünschenswert, zumindest einen Nachteil aus dem Stand der Technik, vorzugsweise zumindest einen der oben genannten Nachteile, zumindest teilweise zu verbessern.

Es ist deshalb eine Aufgabe der vorliegenden Erfindung, Elektroinstallationen zu verbessern, insbesondere durch eine Steigerung der Effizienz und/oder eine Steigerung der Genauigkeit und/oder eine Erleichterung beim Montieren der Elektroinstallationen.

Diese Aufgabe wird durch eine Schlauchverlegevorrichtung gemäß den Merkmalen des Anspruchs 1 gemäß einem ersten Aspekt der vorliegenden Offenbarung gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Schlauchverlegevorrichtung kann zum Verlegen mindestens eines Kanals oder einer Leitung, vorzugsweise eines flexiblen Kanals oder einer flexiblen Leitung, vorzugsweise eines Schlauchs, vorzugsweise eines flexiblen Schlauchs, an mindestens einem Panel eingerichtet sein. Der Schlauch kann zum Aufnehmen mindestens einer elektrischen Leitung geeignet oder eingerichtet sein. Der Schlauch kann zum Aufnehmen von mehreren elektrischen Leitungen geeignet oder eingerichtet sein. Die Schlauchverlegevorrichtung kann mindestens eine Greifvorrichtung aufweisen, die dazu eingerichtet sein kann, den Schlauch zu greifen. Die Schlauchverlegevorrichtung kann mindestens eine Bewegungsvorrichtung aufweisen, die dazu eingerichtet sein kann, die Greifvorrichtung in mindestens eine Richtung zu bewegen, um eine Position des Schlauchs an dem Panel einzustellen.

Wie eingangs beschrieben werden im Gebäudebau Elektroinstallationen, beispielsweise das Verlegen von Vorrichtungen zum Aufnehmen von elektrischen Leitungen, beispielsweise Schläuchen, in der Regel manuell bzw. händisch, in der Regel vor Ort am jeweiligen Gebäude, beispielsweise an einer Baustelle, durchgeführt. Derartige manuelle Prozesse erfordern jedoch qualifizierte und/oder relativ kostenintensive Arbeitskräfte. Dies führt außerdem zu einem erheblichen Produktionsaufwand und einer relativ geringen Effizienz. Dadurch werden relativ hohe Kosten verursacht. Des Weiteren sind manuell durchgeführte Montagevorgänge häufig fehleranfällig und/oder weisen häufig eine relativ geringe Montagegenauigkeit bzw. relativ große Abweichungen auf.

Im Gegensatz zum Stand der Technik ermöglicht die hierin beschriebene Schlauchverlegevorrichtung, insbesondere mittels der Greifvorrichtung und der Bewegungsvorrichtung, ein zumindest teilweise automatisiertes, vorzugsweise ein vollautomatisiertes, Verlegen bzw. Montieren des Schlauchs an dem Panel. Dadurch kann der Schlauch relativ schnell und/oder zeiteffizient verlegt werden, im Vergleich zum manuellen Verlegen aus dem Stand der Technik.

Dadurch kann der Schlauch an dem Panel vormontiert werden, insbesondere in größeren Stückzahlen, beispielsweise in einer Fertigungshalle, anstatt direkt am jeweiligen Endmontageort, beispielsweise an einer Baustelle. Das Panel, mit dem daran positionierten, vorzugsweise befestigten, d.h. vormontierten, Schlauch, kann dann als Teil einer Wand und/oder einer Decke eines Raums des jeweiligen Gebäudes montiert werden. Dadurch kann der Montageprozess zum Anbringen des Schlauchs relativ effizient gestaltet werden, beispielsweise in einer Fertigungslinie. Dadurch können die Stückzahlen der montierten Panele erhöht werden, insbesondere im Vergleich zur manuellen Montage.

Außerdem kann der Schlauch dadurch präziser, d.h. mit geringeren Abweichungen gegenüber einer Sollposition, an dem Panel montiert werden, im Vergleich zur manuellen Montage. Dadurch können beispielsweise Montagefehler vermieden oder zumindest reduziert werden. Außerdem kann dadurch allgemein eine höhere Montagequalität erreicht werden.

Das Panel kann dazu eingerichtet sein, als Teil einer Wand und/oder einer Decke, insbesondere einer Hohlwand und/oder einer Hohldecke, eines Raums eines Gebäudes montiert zu werden. Das Panel kann, als Teil der Wand und/oder der Decke des Raums, den Raum zumindest bereichsweise begrenzen. Im montierten Zustand des Panels kann das Panel zumindest teilweise in und/oder an einer Öffnung, die in der Wand und/oder der Decke definiert ist, angeordnet sein und/oder die Öffnung zumindest teilweise verschließen und/oder das Panel kann sich zumindest teilweise über die Öffnung erstrecken. Das Panel kann formschlüssig und/oder kraftschlüssig und/oder stoffschlüssig mit der Wand und/oder der Decke, insbesondere mit einem Abschnitt der Wand und/oder der Decke, der dem Panel im montierten Zustand benachbart angeordnet ist, befestigbar sein, beispielsweise mittels Schrauben, Klebstoff, Clips, Klammern, Steckverbindungen, etc. Im montierten Zustand des Panels kann das Panel im Wesentlichen als Teil der Wand und/oder der Decke eines Raums dienen. Ein Raum eines Gebäudes, im Sinne der vorliegenden Offenbarung, kann als Raum eines Gebäudes, in dem sich Menschen üblicherweise aufhalten bzw. aufhalten können, beispielsweise ein Wohnzimmer, ein Schlafzimmer, etc., verstanden werden.

Das Panel kann eine Platte, vorzugsweise eine Trägerplatte, sein. Das Panel kann als Gipsfaserplatte oder Trockenbauplatte ausgebildet sein.

Das Panel kann eine Innenseite, die dem Raum zugewandt ist, und eine Außenseite, die von dem Raum abgewandt ist, aufweisen, jeweils bezogen auf einen montierten Zustand des Panels. Die Bewegungsvorrichtung kann dazu eingerichtet sein, die Greifvorrichtung in mindestens eine Richtung zu bewegen, um eine Position des Schlauchs an der Außenseite des Panels einzustellen, insbesondere so dass der Schlauch an einer vom Raum nicht sichtbaren Seite des Panels angeordnet, und anschließend optional befestigt, werden kann. Mit anderen Worten, der Schlauch kann rückseitig an dem Panel verlegt werden, bezogen auf einen montierten Zustand des Panels.

Der Schlauch kann allgemein eine längliche Hülle sein, die einen Hohlraum aufweist, der dazu eingerichtet ist, die elektrische(n) Leitung(en) aufzunehmen. Demnach kann der Begriff "Schlauch" beispielsweise durch "Hülle", "längliche Hülle", "Kanal", "Leitung" oder einen ähnlichen Begriff ersetzt werden. Gleichermaßen kann der Begriff "Schlauchverlegevorrichtung" durch den allgemeineren Begriff "Verlegevorrichtung" ersetzt werden.

Der Schlauch kann flexibel, vorzugsweise zumindest biegsam und/oder dehnbar, ausgebildet sein. Der Schlauch kann als Wellrohr ausgebildet sein. Alternativ kann der Schlauch eine im Wesentlichen glatte Außenkontur aufweisen.

Die Bewegungsvorrichtung kann dazu eingerichtet sein, die Greifvorrichtung in mindestens eine Richtung zu bewegen, um den Schlauch neben oder in der Nähe einer Elektrodose bzw. einer Stelle des Panels, an der eine Elektrodose angebracht werden soll, zu positionieren. Mit anderen Worten, die "Position des Schlauchs an dem Panel", welche durch die Bewegungsvorrichtung einstellbar sein kann, kann neben oder in der Nähe einer Elektrodose bzw. einer Stelle des Panels, an der eine Elektrodose angebracht werden soll, sein. Dadurch kann sich der Schlauch zur Elektrodose (aber nicht zwingend bis an die Elektrodose) erstrecken, so dass elektrische Leitungen, welche mit der Elektrodose verbunden sind oder verbunden werden sollen, in dem Schlauch aufgenommen werden können.

Die Schlauchverlegevorrichtung kann dazu eingerichtet sein, mehrere Schläuche an dem Panel zu verlegen, vorzugsweise zu befestigen, vorzugsweise derart, dass die Schläuche an dem Panel in Reihe und/oder parallel zueinander angeordnet sind.

Die Schlauchverlegevorrichtung kann eine Station einer Montageanordnung mit einer Mehrzahl von Stationen sein, wobei jede Station dazu eingerichtet ist, mindestens einen Montageschritt durchzuführen. Beispielsweise kann eine Station der Montageanordnung zum Anordnen und Befestigen der Elektrodose an dem Panel eingerichtet sein. Die Stationen können dazu eingerichtet sein, den/die jeweiligen Montageschritt(e) sequenziell durchzuführen. Alternativ oder zusätzlich können die Stationen dazu eingerichtet sein, den/die jeweiligen Montageschritt(e) in einer vorbestimmten Reihenfolge durchzuführen.

Vorzugsweise weist die Schlauchverlegevorrichtung mindestens eine Befestigungselement-Zuführvorrichtung auf. Die Befestigungselement-Zuführvorrichtung kann dazu eingerichtet sein, mindestens ein Befestigungselement, das zum Befestigen des Schlauchs an dem Panel eingerichtet ist, zum Schlauch und/oder zur Greifvorrichtung zuzuführen. Dadurch kann die Montage des Schlauchs an dem Panel weiter automatisiert bzw. unterstützt werden. Im Stand derTechnik wird eine Befestigung des jeweiligen Schlauchs in der Regel manuell durchgeführt, insbesondere durch manuelle Werkzeuge, beispielsweise durch einen Hammer und/oder Schraubenzieher. Das Befestigungselement kann jedes Befestigungselement sein, das geeignet ist, den Schlauch an dem Panel, lösbar oder unlösbar, zu befestigen. Beispielsweise kann das Befestigungselement ein Nagel, eine Schelle, eine Schraube, eine Klammer, ein Klebstoff, etc. sein. Das Befestigungselement kann dazu eingerichtet sein, den Schlauch formschlüssig und/oder kraftschlüssig an dem Panel, lösbar oder unlösbar, zu befestigen.

Vorzugsweise weist die Befestigungselement-Zuführvorrichtung mindestens eine Befestigungselement-Greifvorrichtung auf. Die Befestigungselement-Greifvorrichtung kann dazu eingerichtet sein, das Befestigungselement zu greifen und an dem Schlauch und/oder dem Panel zu positionieren. Die Befestigungselement-Greifvorrichtung kann dazu eingerichtet sein, das Befestigungselement formschlüssig und/oder kraftschlüssig und/oder mittels eines Vakuums zu greifen. Beispielsweise kann die Schlauchverlegevorrichtung, beispielsweise die Befestigungselement-Greifvorrichtung, einen Vakuumgenerator, beispielsweise eine Pumpe, aufweisen, der dazu eingerichtet sein kann, ein Vakuum zu generieren und das Vakuum an einer Greifschnittstelle der Befestigungselement-Greifvorrichtung, an der das Befestigungselement gegriffen werden soll, bereitzustellen. Der Vakuumgenerator kann alternativ ein externes Bauteil sein. Demnach muss der Vakuumgenerator (falls vorhanden) nicht zwangsläufig Teil der Schlauchverlegevorrichtung sein.

Vorzugsweise weist die Schlauchverlegevorrichtung mindestens eine Befestigungsvorrichtung auf, die dazu eingerichtet sein kann, den Schlauch an dem Panel zu befestigen, vorzugsweise derart, dass die Befestigungsvorrichtung das Befestigungselement an dem Panel fixiert. Das Befestigungselement kann dazu eingerichtet sein, den Schlauch zumindest teilweise aufzunehmen, zumindest wenn das Befestigungselement an dem Panel fixiert ist. Das Befestigungselement kann beispielsweise das durch die hierin beschriebene Befestigungselement-Zuführvorrichtung zugeführte Befestigungselement sein. Beispielweise kann das Befestigungselement eine Schelle sein, welches mittels Schrauben und/oder Stiften und/oder Klebstoff und/oder Nägeln, mittels der Befestigungsvorrichtung, an dem Panel fixierbar ist.

Vorzugsweise weist die Schlauchverlegevorrichtung mindestens eine Rutsche auf. Die Rutsche kann gegenüber einer Horizontalen Ebene geneigt sein. Die Rutsche kann dazu eingerichtet sein, mindestens eine Komponente, vorzugsweise mindestens eine an dem Schlauch und/oder dem Panel zu montierende Komponente, zumindest teilweise aufzunehmen und durch Schwerkrafteinwirkung, vorzugsweise nur durch Schwerkrafteinwirkung, zumindest teilweise zum Schlauch und/oder Panel zuzuführen. Dadurch kann die zu montierende Komponente relativ effizient zugeführt werden, insbesondere durch eine Reduktion, insbesondere durch einen vollständigen Verzicht, der zum Zuführen der zu montierenden Komponente benötigten externen Energie, beispielsweise Strom und/oder Druckluft. Außerdem kann dadurch eine Fehleranfälligkeit des Zuführens der zu montierenden Komponente(n), beispielsweise durch Versagen von bewegten und/oder angetriebenen, beispielsweise durch Strom angetriebenen, Bauteilen, reduziert werden. Die Komponente kann eine Komponente sein, die bei der Montage des Schlauchs an dem Panel nützlich ist und/oder zur Montage des Schlauchs dient.

Vorzugsweise weist die Befestigungselement-Zuführvorrichtung mindestens eine Rutsche auf. Die Rutsche kann gegenüber einer horizontalen Ebene geneigt sein. Die Rutsche kann dazu eingerichtet sein, das Befestigungselement zumindest teilweise aufzunehmen und durch Schwerkrafteinwirkung, vorzugsweise nur durch Schwerkrafteinwirkung, zumindest teilweise zum Schlauch zuzuführen. Dadurch kann das Befestigungselement relativ effizient zugeführt werden, insbesondere durch eine Reduktion, insbesondere durch einen vollständigen Verzicht, der zum Zuführen des Befestigungselements benötigten externen Energie, beispielsweise Strom und/oder Druckluft. Außerdem kann dadurch eine Fehleranfälligkeit des Zuführens des Befestigungselements, beispielsweise durch Versagen von bewegten und/oder angetriebenen, beispielsweise durch Strom angetriebenen, Bauteilen, reduziert werden.

Vorzugsweise weist die Rutsche mindestens einen Führungsstab auf, entlang dessen das Befestigungselement führend gleitbar sein kann. Dadurch kann das Befestigungselement relativ zuverlässig und genau zum Schlauch zugeführt werden. Ferner kann dadurch eine Bewegungsbahn des Befestigungselements, entlang der das Befestigungselement zum Schlauch zugeführt wird, flexibler gestaltet werden, insbesondere indem das Befestigungselement entlang der Bewegungsbahn durch den Führungsstab geführt, vorzugsweise gelenkt und/oder umgelenkt, wird.

Vorzugsweise weist die Rutsche eine Mehrzahl des mindestens einen Führungsstabs auf. Mindestens ein erster Führungsstab der Führungsstäbe kann dazu eingerichtet sein, in mindestens einem Hohlraum des Befestigungselements, beispielsweise wenn das Befestigungselement als Schelle ausgeführt ist, aufgenommen zu werden, um den ersten Führungsstab an mindestens einer Innenfläche des Befestigungselements zu führen. Mindestens ein zweiter Führungsstab der Führungsstäbe kann dazu eingerichtet sein, das Befestigungselement an mindestens einer Außenfläche des Befestigungselements zu führen. Dadurch kann das Befestigungselement, im Vergleich zu einer Rutsche mit nur einem Führungsstab, genauer und zuverlässiger durch die Rutsche geführt werden. Außerdem kann dadurch die oben genannte Bewegungsbahn des Befestigungselements flexibler und/oder präziser gestaltet werden.

Vorzugsweise weist die Rutsche mindestens drei des mindestens einen Führungsstabs auf. Die mindestens drei Führungsstäbe sind vorzugsweise dreiecksförmig oder im Wesentlichen dreiecksförmig angeordnet. Dadurch kann die Führungsfunktion der Rutsche weiter verbessert werden, beispielsweise durch eine Erhöhung und/oder eine größere Verteilung der Führungspunkte an dem Befestigungselement.

Eine Anordnung der Führungsstäbe, insbesondere relativ zueinander, kann an die Dimensionen und/oder die Form, beispielsweise die Kontur, des Befestigungselements angepasst und/oder abgestimmt sein.

Vorzugsweise ist/sind der Führungsstab bzw. die Führungsstäbe zumindest teilweise gebogen, vorzugsweise in einer vertikal verlaufenden Ebene. Mit anderen Worten, die vertikal verlaufende Ebene kann sich zumindest durch den jeweiligen gebogenen Abschnitt des jeweiligen Führungsstabs vollständig erstrecken und/oder der jeweils gebogene Abschnitt des jeweiligen Führungsstabs kann in der vertikal verlaufenden Ebene liegen.

Vorzugsweise ist die Rutsche dazu eingerichtet, eine Mehrzahl von Befestigungselementen, vorzugsweise mindestens drei Befestigungselemente, vorzugsweise mindestens fünf Befestigungselemente, vorzugsweise mindestens zehn Befestigungselemente, vorzugsweise mindestens 15 Befestigungselemente, vorzugsweise mindestens 20 Befestigungselemente, vorzugsweise mindestens 25 Befestigungselemente, vorzugsweise mindestens 30 Befestigungselemente, zumindest teilweise aufzunehmen. Die Rutsche kann dazu eingerichtet sein, die Befestigungselemente in Reihe und/oder als Stapel zumindest teilweise aufzunehmen. Dadurch kann ein relativ großer Vorrat an Befestigungselementen durch die Rutsche aufgenommen werden. Dadurch können relativ viele Befestigungselemente appliziert werden, ohne dass die Rutsche mit Befestigungselementen nachgeladen werden muss.

Vorzugsweise weist die Rutsche mindestens ein Orientierungsmerkmal auf, das dazu eingerichtet sein kann, das Befestigungselement in mindestens eine vorbestimmte Soll-Orientierung zu positionieren. Alternativ, oder zusätzlich, kann das Orientierungsmerkmal dazu eingerichtet sein, ein Bewegen des Befestigungselements entlang der Rutsche nur dann zuzulassen, wenn das Befestigungselement in einer vorbestimmten Soll-Orientierung positioniert ist. Dadurch kann sichergestellt werden, dass das Befestigungselement in der Soll-Orientierung zugeführt bzw. appliziert wird bzw. das Risiko einer Abweichung von der Soll-Orientierung kann reduziert werden bzw. ein Maß an Abweichung von der Soll-Orientierung kann reduziert wird.

Vorzugsweise ist das Orientierungsmerkmal eine Öffnung. Alternativ kann das Orientierungsmerkmal eine Öffnung aufweisen. Die Öffnung kann zumindest abschnittsweise eine Kontur und/oder eine Geometrie aufweisen, die an eine Kontur und/oder Geometrie des Befestigungselements angepasst ist und/oder einer Kontur und/oder einer Geometrie des Befestigungselements entspricht. Insbesondere kann das Befestigungselement nur dann durch die Öffnung passieren, wenn das Befestigungselement in der Soll-Orientierung angeordnet ist bzw. wenn das Befestigungselement nur geringfügig, d.h. innerhalb eines vorbestimmten Bereichs einer Soll-Orientierung, von der Soll-Orientierung abweicht.

Vorzugsweise weist die Greifvorrichtung einen ersten Greifer und mindestens einen zweiten Greifer auf. Der erste Greifer und der zweite Greifer können jeweils dazu eingerichtet sein, den Schlauch zu greifen. Der erste Greifer und der zweite Greifer können entlang des Schlauchs voneinander beabstandet angeordnet sein, zumindest wenn der Schlauch von dem ersten Greifer und dem zweiten Greifer gegriffen wird. Dadurch kann der Schlauch an zwei voneinander beabstandeten Abschnitten des Schlauchs gegriffen werden. Dadurch kann der Schlauch relativ zuverlässig gegriffen werden. Außerdem kann eine Orientierung des Schlauchs eingestellt, insbesondere durch Ausrichten einer Längsachse des Schlauchs, und/oder beibehalten werden.

Vorzugsweise weisen der erste Greifer und der zweite Greifer jeweils zwei voneinander beabstandete Greifbacken auf. Die Greifbacken können dazu eingerichtet sein, den Schlauch zwischen den Greifbacken des ersten Greifers bzw. des zweiten Greifers klemmend zu greifen. Die Greifbacken des ersten Greifers und/oder die Greifbacken des zweiten Greifers können zwischen einer ersten Position, in der die Greifbacken des jeweiligen Greifers um einen ersten Abstand voneinander beabstandet sind, und einer zweiten Position, in der die Greifbacken des jeweiligen Greifers um einen zweiten Abstand voneinander beabstandet sind, bewegbar sein, beispielsweise mittels mindestens eines Aktuators. Der zweite Abstand kann größer sein als der erste Abstand. Der zweite Abstand kann ein maximal einstellbarer Abstand der Greifbacken des jeweiligen Greifers sein.

Vorzugsweise ist ein maximal einstellbarer Abstand der Greifbacken des ersten Greifers zueinander größer als ein maximal einstellbarer Abstand der Greifbacken des zweiten Greifers zueinander. Dadurch können die Greifer, insbesondere die maximal einstellbaren Abstände der Greifbacken der Greifer, zu unterschiedlichen Zwecken eingesetzt werden und/oder unterschiedliche Funktionen haben.

Vorzugsweise ist der maximal einstellbare Abstand der Greifbacken des zweiten Greifers derart, dass die Greifbacken des zweiten Greifers den Schlauch berühren, wenn der Schlauch zwischen den Greifbacken des zweiten Greifers angeordnet ist und die Greifbacken des zweiten Greifers um den maximal einstellbaren Abstand voneinander beabstandet sind. Vorzugsweise ist der maximal einstellbare Abstand der Greifbacken des zweiten Greifers derart, dass der Schlauch gleitend zwischen den Greifbacken des zweiten Greifers bewegbar ist, wenn der Schlauch zwischen den Greifbacken des zweiten Greifers angeordnet ist, die Greifbacken des zweiten Greifers um den maximal einstellbaren Abstand voneinander beabstandet sind und der Schlauch relativ zu den Greifbacken des zweiten Greifers bewegt wird, beispielsweise durch Bewegen des Schlauchs und/oder Bewegen des ersten Greifers und/oder des zweiten Greifers. Dadurch können die Greifbacken des zweiten Greifers den Schlauch führen, insbesondere gleitend führen. Dergrößere maximal einstellbare Abstand der Greifbacken des ersten Greifers kann (beispielsweise) ermöglichen, dass eine Komponente, beispielsweise das hierin beschriebene Befestigungselement, beispielsweise eine Schelle, zum Befestigen des Schlauchs an dem Panel, durch die Greifbacken des ersten Greifers passieren kann, wenn der Schlauch zwischen den Greifbacken des ersten Greifers angeordnet ist und die Greifbacken des ersten Greifers um den maximal einstellbaren Abstand voneinander beabstandet sind. Dies kann ein Verlegen an dem Panel und/oder ein Bewegen des Schlauchs erleichtern. Beispielsweise können die Greifbacken des zweiten Greifers den Schlauch führen und das Befestigungselement, beispielsweise eine Schelle, kann durch die Greifbacken des ersten Greifers passieren, während der Schlauch relativ zu den Greifbacken der Greifer bewegt wird. Beispielsweise kann das Befestigungselement dadurch durch die Greifbacken des ersten Greifers zu einer Position zwischen den Greifbacken des ersten Greifers und den Greifbacken des zweiten Greifers bewegt werden und/oder durch die Greifbacken des ersten Greifers aus einer Position zwischen den Greifbacken des ersten Greifers und den Greifbacken des zweiten Greifers bewegt werden, während der Schlauch mittels der Greifbacken des zweiten Greifers geführt werden kann. Außerdem kann dadurch der Schlauch relativ zu den Greifern bewegt werden, nachdem der Schlauch mittels des Befestigungselements an dem Panel befestigt wurde, beispielsweise um das nächste Befestigungselement an einem jeweiligen Panel anzubringen, insbesondere ohne dass die Greifer senkrecht zum Panel bewegt werden müssen. Stattdessen können die Greifer, relativ zum Panel, im Wesentlichen entlang des Panels bewegt werden.

Der "maximal einstellbare Abstand" kann jeweils der "zweite Abstand" in der "zweiten Position" sein, wie oben beschrieben.

Vorzugsweise ist/sind ein Abstand zwischen den Greifbacken des ersten Greifers und/oder ein Abstand zwischen den Greifbacken des zweiten Greifers variabel einstellbar, insbesondere derart, dass der Abstand zwischen den Greifbacken des ersten Greifers und der Abstand zwischen den Greifbacken des zweiten Greifers unterschiedlich einstellbar sind, zumindest wenn der Schlauch zwischen den Greifbacken des ersten Greifers und den Greifbacken des zweiten Greifers angeordnet ist und der Schlauch nicht durch den ersten Greifer und den zweiten Greifer gegriffen wird.

Vorzugsweise ist der erste Greifer in Zuführrichtung des Schlauchs zum Panel und/oder zum Schlauch hin vor dem zweiten Greifer angeordnet.

Die Befestigungselement-Zuführvorrichtung kann dazu eingerichtet sein, das Befestigungselement an einer Position bereitzustellen und/oder zu einer Position zuzuführen, vorzugsweise wenn der Schlauch zwischen den Greifbacken des ersten Greifers und den Greifbacken des zweiten Greifers angeordnet ist, vorzugsweise wobei die Position zwischen den Greifbacken des ersten Greifers und den Greifbacken des zweiten Greifers angeordnet ist.

Vorzugsweise weist die Schlauchverlegevorrichtung eine Schlauch-Zuführvorrichtung auf. Die Schlauch-Zuführvorrichtung kann dazu eingerichtet sein, den Schlauch zum Panel und/oder zur Greifvorrichtung zuzuführen. Dadurch kann der Schlauch zumindest teilweise automatisiert, vorzugsweise vollautomatisiert, den Schlauch zum Panel und/oder zur Greifvorrichtung zuführen. Dadurch kann das Verlegen bzw. die Montage des Schlauchs an dem Panel relativ schnell und/oder zeiteffizient durchgeführt werden, im Vergleich zum manuellen Zuführen des Schlauchs zur jeweiligen Montagestelle aus dem Stand der Technik.

Vorzugsweise ist die Schlauch-Zuführvorrichtung dazu eingerichtet, den Schlauch aus einem Vorrat, vorzugsweise einem Vorratsbehälter, zu entnehmen und zum Panel und/oder zur Greifvorrichtung zuzuführen. Der Schlauch, vorzugsweise mehrere Schläuche und/oder mindestens ein in mehrere Schläuche unterteilbarer kontinuierlicher Schlauch, ist vorzugsweise in dem Vorrat aufgenommen.

Vorzugsweise weist die Schlauch-Zuführvorrichtung mindestens eine Zuführstrecke auf, entlang welcher der Schlauch zumindest teilweise zum Panel und/oder zur Greifvorrichtung zuführbar sein kann. Die Zuführstrecke kann gegenüber einer horizontalen Ebene geneigt sein.

Vorzugsweise weist die Schlauch-Zuführvorrichtung mindestens eine Positioniereinrichtung auf, die dazu eingerichtet sein kann, den Schlauch entlang zumindest einer Achse, vorzugsweise entlang von mindestens zwei Achsen, zu positionieren, vorzugsweise relativ zum Panel und/oder der Greifvorrichtung.

Vorzugsweise weist die Schlauchverlegevorrichtung mindestens eine Trennvorrichtung auf, die dazu eingerichtet sein kann, den Schlauch von mindestens einem benachbarten Schlauchabschnitt zu trennen. Die Trennvorrichtung kann ein Messer und/oder eine Klinge sein und/oder aufweisen. Die Schlauchverlegevorrichtung kann dazu eingerichtet sein, die Trennvorrichtung anzusteuern, vorzugsweise automatisch anzusteuern, beispielweise nachdem der Schlauch mittels des Befestigungselements an dem Panel befestigt wurde. Dadurch kann eine Länge des Schlauchs eingestellt werden, vorzugsweise variabel eingestellt werden.

Die eingangs genannte Aufgabe wird außerdem durch eine Schlauch-Zuführvorrichtung gemäß einem zweiten Aspekt der vorliegenden Offenbarung gelöst. Die Vorteile, Merkmale und Ausführungsformen, wie hierin zur Schlauchverlegevorrichtung, insbesondere zur Schlauch-Zuführvorrichtung der Schlauchverlegevorrichtung, beschrieben, gelten analog für die Schlauch-Zuführvorrichtung.

Die Schlauch-Zuführvorrichtung kann unabhängig von der Schlauchverlegevorrichtung, das heißt als separater Aspekt, ausgeführt werden. Alternativ können die Schlauch-Zuführvorrichtung und die Schlauchverlegevorrichtung kombiniert werden, wobei die Schlauch-Zuführvorrichtung eine Komponente der Schlauchverlegevorrichtung sein kann.

Die Schlauch-Zuführvorrichtung kann zum Zuführen mindestens eines Schlauchs zu einem Panel, an dem der Schlauch befestigt werden soll, eingerichtet sein. Der Schlauch kann zum Aufnehmen mindestens einer elektrischen Leitung geeignet oder eingerichtet sein. Der Schlauch kann zum Aufnehmen von mehreren elektrischen Leitungen geeignet oder eingerichtet sein. Die Schlauch-Zuführvorrichtung kann mindestens eine Führungsstrecke aufweisen, entlang welcher der Schlauch zumindest teilweise zum Panel zuführbar ist. Die Zuführstrecke kann gegenüber einer horizontalen Ebene geneigt sein. Die Schlauch-Zuführvorrichtung kann mindestens eine Positioniereinrichtung aufweisen, die dazu eingerichtet sein kann, den Schlauch entlang zumindest einer Achse zu positionieren. Die Schlauch-Zuführvorrichtung kann dazu eingerichtet sein, den Schlauch aus und/oder von mindestens einem Schlauchvorrat zu entnehmen.

Im Gegensatz zum Stand der Technik ermöglicht die hierin beschriebene Schlauch-Zuführvorrichtung ein zumindest teilweise automatisiertes, vorzugsweise ein vollautomatisiertes, Zuführen des Schlauchs zu dem Panel. Dadurch kann der Schlauch relativ schnell und/oder zeiteffizient an dem Panel verlegt und/oder montiert werden, im Vergleich zum manuellen Zuführen gemäß dem Stand der Technik.

Der Schlauchvorrat ist vorzugsweise als Vorratsbehälter ausgebildet.

Die Schlauch-Zuführvorrichtung kann den Schlauchvorrat, beispielsweise den Vorratsbehälter, aufweisen. Mit anderen Worten, der Schlauchvorrat, beispielsweise der Vorratsbehälter, kann Teil der Schlauch-Zuführvorrichtung sein.

Die eingangs genannte Aufgabe wird außerdem durch ein Verfahren zum Verlegen mindestens eines Schlauchs an mindestens einem Panel gelöst. Der Schlauch kann zum Aufnehmen mindestens einer elektrischen Leitung geeignet oder eingerichtet sein. Der Schlauch kann zum Aufnehmen von mehreren elektrischen Leitungen geeignet oder eingerichtet sein. Die Vorteile und Ausführungsformen, wie zur Schlauchverlegevorrichtung beschrieben, gelten auch für das Verfahren.

Das Verfahren wird vorzugsweise mittels der Schlauchverlegevorrichtung nach einer der hierin beschriebenen Ausführungsformen durchgeführt.

Das Verfahren kann aufweisen:
Einstellen, durch mindestens eine Bewegungsvorrichtung, einer Position einer Greifvorrichtung an dem Panel.

Das Verfahren kann aufweisen:
Greifen des Schlauchs durch die Greifvorrichtung.

Das Verfahren kann aufweisen:
Befestigen des Schlauchs an dem Panel mittels mindestens eines Befestigungselements, vorzugsweise mittels mindestens einer Befestigungsschelle.

Die eingangs genannte Aufgabe wird außerdem durch ein Verfahren zum Zuführen mindestens eines Schlauchs zu einem Panel, an dem der Schlauch befestigt werden soll, gelöst. Der Schlauch kann zum Aufnehmen mindestens einer elektrischen Leitung geeignet oder eingerichtet sein. Der Schlauch kann zum Aufnehmen von mehreren elektrischen Leitungen geeignet oder eingerichtet sein. Die Vorteile und Ausführungsformen, wie zur Schlauch-Zuführvorrichtung beschrieben, gelten auch für das Verfahren.

Das Verfahren wird vorzugsweise mittels der Schlauch-Zuführvorrichtung nach einer der hierin beschriebenen Ausführungsformen durchgeführt.

Das Verfahren kann aufweisen:
Entnehmen des Schlauchs aus mindestens einem Schlauchvorrat.

Das Verfahren kann aufweisen:
Zuführen des Schlauchs entlang mindestens einer Führungsstrecke zumindest teilweise zum Panel. Die Zuführstrecke kann gegenüber einer horizontalen Ebene geneigt sein.

Das Verfahren kann aufweisen:
Positionieren, durch mindestens eine Positioniereinrichtung, des Schlauchs entlang zumindest einer Achse zu positionieren.

Das hierin beschriebene Verfahren ist nicht auf die Reihenfolge, in welcher die Schritte hierin beschrieben sind, beschränkt. Stattdessen können die Schritte in beliebiger Reihenfolge durchgeführt werden.

Die folgende Aspekteliste stellt alternative und/oder zusätzliche Merkmale der Erfindung dar:
1. Verlegevorrichtung zum Verlegen mindestens eines Kanals oder einer Leitung, vorzugsweise eines flexiblen Kanals oder einer flexiblen Leitung, vorzugsweise eines Schlauchs, vorzugsweise eines flexiblen Schlauchs, an mindestens einer Struktur, vorzugsweise mindestens einem Panel, wobei der Kanal bzw. die Leitung vorzugsweise zum Aufnehmen von elektrischen Leitungen geeignet ist, wobei die Schlauchverlegevorrichtung aufweist:
   mindestens eine Greifvorrichtung, die dazu eingerichtet ist, den Schlauch zu greifen;
   optional mindestens eine Positioniervorrichtung, die dazu eingerichtet ist, die Greifvorrichtung entlang mindestens einer Richtung zu positionieren, vorzugsweise zu bewegen, um eine Position des Schlauchs an dem Panel einzustellen und/oder zu halten.
2. Verlegevorrichtung nach Aspekt 1, zusätzlich aufweisend mindestens eine Befestigungselement-Zuführvorrichtung, die dazu eingerichtet ist, mindestens ein Befestigungselement, das zum Befestigen des Schlauchs an dem Panel eingerichtet ist, zum Schlauch und/oder zur Greifvorrichtung zuzuführen.
3. Verlegevorrichtung nach Aspekt 2, wobei die Befestigungselement-Zuführvorrichtung mindestens eine Befestigungselement-Greifvorrichtung aufweist, die dazu eingerichtet ist, das Befestigungselement zu greifen und an dem Schlauch und/oder dem Panel zu positionieren.
4. Verlegevorrichtung nach einem der vorhergehenden Aspekte, aufweisend mindestens eine Rutsche, die gegenüber einer Horizontalen Ebene geneigt ist und dazu eingerichtet ist, mindestens eine Komponente, vorzugsweise mindestens eine an dem Schlauch und/oder dem Panel zu montierende Komponente, zumindest teilweise aufzunehmen und durch Schwerkrafteinwirkung zumindest teilweise zum Schlauch und/oder Panel zuzuführen.
5. Verlegevorrichtung nach Aspekt 2 oder 3 oder nach Aspekt 4 in Abhängigkeit von Aspekt 2, wobei die Befestigungselement-Zuführvorrichtung mindestens eine Rutsche aufweist, die gegenüber einer horizontalen Ebene geneigt ist und dazu eingerichtet ist, das Befestigungselement zumindest teilweise aufzunehmen und durch Schwerkrafteinwirkung zumindest teilweise zum Schlauch zuzuführen.
6. Verlegevorrichtung nach Aspekt 5, wobei die Rutsche mindestens einen Führungsstab aufweist, entlang dessen das Befestigungselement führend gleitbar ist.
7. Verlegevorrichtung nach Aspekt 6, wobei die Rutsche eine Mehrzahl des mindestens einen Führungsstabs aufweist, wobei mindestens ein erster Führungsstab der Führungsstäbe dazu eingerichtet ist, in mindestens einem Hohlraum des Befestigungselements aufgenommen zu werden, um den ersten Führungsstab an mindestens einer Innenfläche des Befestigungselements zu führen, und wobei mindestens ein zweiter Führungsstab der Führungsstäbe dazu eingerichtet ist, das Befestigungselement an mindestens einer Außenfläche des Befestigungselements zu führen.
8. Verlegevorrichtung nach Aspekt 6 oder 7, wobei der Führungsstab bzw. die Führungsstäbe zumindest teilweise gebogen ist bzw. sind, vorzugsweise in einer vertikal verlaufenden Ebene.
9. Verlegevorrichtung nach einem der Aspekte 5 bis 8, wobei die Rutsche dazu eingerichtet ist, eine Mehrzahl von Befestigungselementen, vorzugsweise mindestens drei Befestigungselemente, vorzugsweise mindestens fünf Befestigungselemente, vorzugsweise mindestens zehn Befestigungselemente, vorzugsweise mindestens 15 Befestigungselemente, vorzugsweise mindestens 20 Befestigungselemente, vorzugsweise mindestens 25 Befestigungselemente, vorzugsweise mindestens 30 Befestigungselemente, zumindest teilweise aufzunehmen, wobei die Rutsche dazu eingerichtet ist, die Befestigungselemente in Reihe und/oder als Stapel zumindest teilweise aufzunehmen.
10. Verlegevorrichtung nach einem der Aspekte 5 bis 9, wobei die Rutsche mindestens ein Orientierungsmerkmal aufweist, das dazu eingerichtet ist:
   das Befestigungselement in mindestens eine vorbestimmte Soll-Orientierung zu positionieren;
      und/oder
   ein Bewegen des Befestigungselements entlang der Rutsche nur dann zuzulassen, wenn das Befestigungselement in einer vorbestimmten Soll-Orientierung positioniert ist.
11. Verlegevorrichtung nach Aspekt 10, wobei das Orientierungsmerkmal eine Öffnung ist und/oder aufweist, wobei die Öffnung zumindest abschnittsweise eine Kontur und/oder eine Geometrie aufweist, die an eine Kontur und/oder Geometrie des Befestigungselements angepasst ist und/oder einer Kontur und/oder Geometrie des Befestigungselements entspricht.
12. Verlegevorrichtung nach einem der vorhergehenden Aspekte, wobei die Greifvorrichtung einen ersten Greifer und mindestens einen zweiten Greifer aufweist, wobei der erste Greifer und der zweite Greifer jeweils dazu eingerichtet sind, den Schlauch zu greifen, wobei der erste Greifer und der zweite Greifer entlang des Schlauchs voneinander beabstandet angeordnet sind, zumindest wenn der Schlauch von dem ersten Greifer und dem zweiten Greifer gegriffen wird.
13. Verlegevorrichtung nach Aspekt 12, wobei der erste Greifer und der zweite Greifer jeweils zwei voneinander beabstandete Greifbacken aufweisen, wobei die Greifbacken dazu eingerichtet sind, den Schlauch zwischen den Greifbacken des ersten Greifers bzw. des zweiten Greifers klemmend zu greifen, vorzugsweise wobei ein maximal einstellbarer Abstand der Greifbacken des ersten Greifers zueinander größer ist als ein maximal einstellbarer Abstand der Greifbacken des zweiten Greifers zueinander.
14. Verlegevorrichtung nach Aspekt 13, wobei ein Abstand zwischen den Greifbacken des ersten Greifers und/oder ein Abstand zwischen den Greifbacken des zweiten Greifers variabel einstellbar ist/sind, insbesondere derart, dass der Abstand zwischen den Greifbacken des ersten Greifers und der Abstand zwischen den Greifbacken des zweiten Greifers unterschiedlich einstellbar sind, zumindest wenn der Schlauch zwischen den Greifbacken des ersten Greifers und den Greifbacken des zweiten Greifers angeordnet ist und der Schlauch nicht durch den ersten Greifer und den zweiten Greifer gegriffen wird.
15. Verlegevorrichtung nach einem der Aspekte 12 bis 14, wobei der erste Greifer in Zuführrichtung des Schlauchs zum Panel und/oder zum Schlauch hin vor dem zweiten Greifer angeordnet ist.
16. Verlegevorrichtung nach einem der vorhergehenden Aspekte, zusätzlich aufweisend eine Schlauch-Zuführvorrichtung, die dazu eingerichtet ist, den Schlauch zum Panel und/oder zur Greifvorrichtung zuzuführen.
17. Verlegevorrichtung nach Aspekt 16, wobei die Schlauch-Zuführvorrichtung dazu eingerichtet ist, den Schlauch aus einem Vorratsbehälter zu entnehmen, in dem der Schlauch, vorzugsweise mehrere Schläuche und/oder mindestens ein in mehrere Schläuche unterteilbarer kontinuierlicher Schlauch, aufgenommen ist, und zum Panel und/oder zur Greifvorrichtung zuzuführen.
18. Verlegevorrichtung nach Aspekt 16 oder 17, wobei die Schlauch-Zuführvorrichtung mindestens eine Zuführstrecke aufweist, entlang welcher der Schlauch zumindest teilweise zum Panel und/oder zur Greifvorrichtung zuführbar ist, wobei die Zuführstrecke gegenüber einer horizontalen Ebene geneigt ist.
19. Verlegevorrichtung nach einem der Aspekte 16 bis 18, wobei die Schlauch-Zuführvorrichtung mindestens eine Positioniereinrichtung aufweist, die dazu eingerichtet ist, den Schlauch entlang zumindest einer Achse, vorzugsweise entlang von mindestens zwei Achsen, zu positionieren, vorzugsweise relativ zum Panel und/oder der Greifvorrichtung.
20. Verlegevorrichtung nach einem der vorhergehenden Aspekte, zusätzlich aufweisend mindestens eine Trennvorrichtung, die dazu eingerichtet ist, den Schlauch von mindestens einem benachbarten Schlauchabschnitt zu trennen.
21. Verlegevorrichtung nach einem der vorhergehenden Aspekte, zusätzlich mit mindestens einer Befestigungsvorrichtung, die dazu eingerichtet ist, den Schlauch an dem Panel zu befestigen, vorzugsweise derart, dass die Befestigungsvorrichtung mindestens ein Befestigungselement an dem Panel fixiert, wobei das Befestigungselement dazu eingerichtet ist, den Schlauch zumindest teilweise aufzunehmen, zumindest wenn das Befestigungselement an dem Panel fixiert ist.
22. Eine Zuführvorrichtung zum Zuführen mindestens eines Schlauchs zu mindestens einer Struktur, vorzugsweise einem Panel, an dem der Schlauch befestigt werden soll, wobei der Schlauch vorzugsweise zum Aufnehmen von elektrischen Leitungen geeignet ist, wobei die Schlauch-Zuführvorrichtung aufweist:
   mindestens eine Führungsstrecke, entlang welcher der Schlauch zumindest teilweise zum Panel zuführbar ist, wobei die Zuführstrecke gegenüber einer horizontalen Ebene geneigt ist;
   mindestens eine Positioniereinrichtung, die dazu eingerichtet ist, den Schlauch entlang zumindest einer Achse zu positionieren;
   wobei die Schlauch-Zuführvorrichtung dazu eingerichtet ist, den Schlauch aus mindestens einem Schlauchvorrat zu entnehmen.
23. Ein Verfahren zum Verlegen mindestens eines Schlauchs an mindestens einer Struktur, vorzugsweise einem Panel, mittels einer Verlegevorrichtung, vorzugsweise mittels der Verlegevorrichtung nach einem der Aspekte 1 bis 21, wobei der Schlauch zum Aufnehmen von elektrischen Leitungen geeignet ist, wobei das Verfahren aufweist:
   Greifen des Schlauchs durch eine Greifvorrichtung der Verlegevorrichtung;
   optional, Einstellen, durch mindestens eine Positioniervorrichtung der Verlegevorrichtung, vorzugsweise mindestens eine Bewegungsvorrichtung der Verlegevorrichtung, einer Position der Greifvorrichtung an dem Panel
   optional, Befestigen des Schlauchs, mittels einer Befestigungsvorrichtung der Verlegevorrichtung, an dem Panel.
24. Ein Verfahren zum Zuführen mindestens eines Schlauchs zu einem Panel, an dem der Schlauch befestigt werden soll, vorzugsweise mittels der Schlauch-Zuführvorrichtung nach Aspekt 22, wobei der Schlauch zum Aufnehmen von elektrischen Leitungen geeignet ist, wobei das Verfahren aufweist:
   Entnehmen des Schlauchs aus mindestens einem Schlauchvorrat;
   Zuführen des Schlauchs entlang mindestens einer Führungsstrecke zumindest teilweise zum Panel, wobei die Zuführstrecke gegenüber einer horizontalen Ebene geneigt ist; und
   Positionieren, durch mindestens eine Positioniereinrichtung, des Schlauchs entlang zumindest einer Achse zu positionieren.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1: zeigt, in einer schematischen und perspektivischen Ansicht, eine Schlauchverlegevorrichtung gemäß einer Ausführungsform der vorliegenden Erfindung;
- Fig. 2: zeigt, in einer weiteren schematischen und perspektivischen Ansicht, die Schlauchverlegevorrichtung aus Fig. 1;
- Fig. 3: zeigt, in einer weiteren schematischen und perspektivischen Ansicht, eine Schlauch-Zuführvorrichtung gemäß einer Ausführungsform der vorliegenden Erfindung;
- Fig. 4: zeigt, in einer schematischen und vergrößerten Ansicht, einen Abschnitt der Schlauch-Zuführvorrichtung aus Fig. 3.

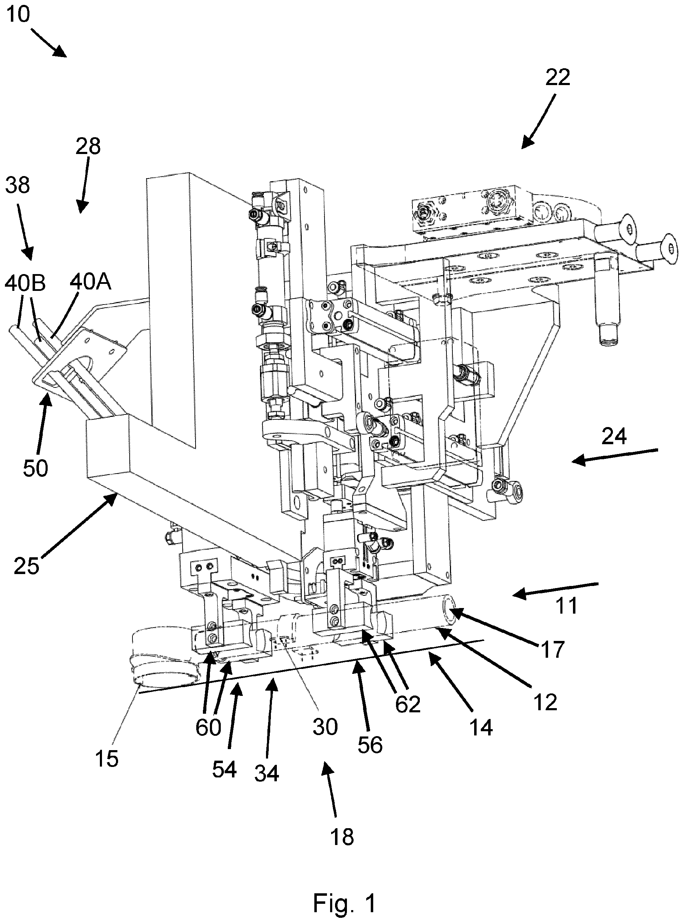

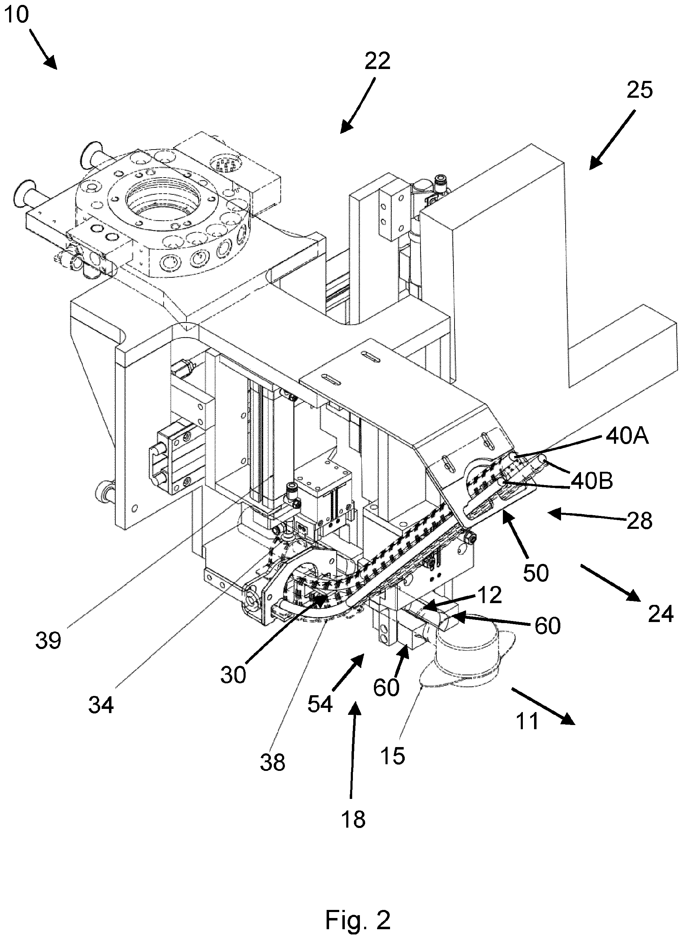

Fig. 1 und 2 zeigen eine Schlauchverlegevorrichtung 10 zum Verlegen mindestens eines Schlauchs 12 an mindestens einem Panel 14. Der Schlauch 12 kann zum Aufnehmen von elektrischen Leitungen geeignet sein, insbesondere in einem Hohlraum 17 des Schlauchs 12. Der Schlauch 12 kann als Wellrohr ausgebildet sein. Alternativ kann der Schlauch 12 eine im Wesentlichen glatte Außenkontur und/oder Innenkontur aufweisen.

Der Schlauch 12 kann in und/oder entlang einer Zuführrichtung 11 zum Panel zugeführt werden, beispielsweise mittels einer Schlauch-Zuführvorrichtung und/oder einer Bewegungsvorrichtung (siehe die entsprechende Beschreibung hierzu unten). Der Schlauch 12 kann, insbesondere in und/oder entlang der Zuführrichtung 11, zu mindestens einer Elektrodose 15 zugeführt werden, beispielsweise mittels einer Schlauch-Zuführvorrichtung und/oder einer Bewegungsvorrichtung, um den Schlauch neben oder in der Nähe einer Elektrodose 15 bzw. einer Stelle des Panels, an der eine Elektrodose 15 angebracht werden soll, anzuordnen. Insbesondere kann der Schlauch 12 dazu eingerichtet sein, elektrische Kabel, die mit der Elektrodose 15 elektrisch verbunden oder elektrisch verbindbar sind, aufzunehmen.

Die Schlauchverlegevorrichtung 10 kann mindestens eine Greifvorrichtung 18 aufweisen, die dazu eingerichtet sein kann, den Schlauch 12 zu greifen. Die Schlauchverlegevorrichtung 10 kann mindestens eine Bewegungsvorrichtung 22 aufweisen, die dazu eingerichtet sein kann, die Greifvorrichtung 18 in mindestens eine Richtung 24 zu bewegen, um eine Position des Schlauchs 12 an dem Panel 14 einzustellen.

Die Schlauchverlegevorrichtung 10 kann mindestens eine Befestigungsvorrichtung 25 aufweisen, die dazu eingerichtet sein kann, den Schlauch 12 an dem Panel 14 zu befestigen, vorzugsweise derart, dass die Befestigungsvorrichtung 25 mindestens ein Befestigungselement 30 an dem Panel 14 fixiert. Das Befestigungselement 31 kann dazu eingerichtet sein, den Schlauch 12 zumindest teilweise aufzunehmen, zumindest wenn das Befestigungselement 30 an dem Panel 14 fixiert ist. Beispielsweise kann das Befestigungselement 30 ein Nagel, eine Schelle, eine Schraube, eine Klammer, ein Klebstoff, etc., sein. Das Befestigungselement 30 kann dazu eingerichtet sein, den Schlauch 12 formschlüssig und/oder kraftschlüssig an dem Panel 14, lösbar oder unlösbar, zu befestigen.

Die Schlauchverlegevorrichtung 10 kann mindestens eine Befestigungselement-Zuführvorrichtung 28 aufweisen, die dazu eingerichtet sein kann, das Befestigungselement 30, d.h. mindestens eines davon, zum Schlauch 12 und/oder zur Greifvorrichtung 18 zuzuführen.

Die Schlauchverlegevorrichtung 10 kann als zusammenhängende Einheit verfahrbar und/oder bewegbar sein, beispielsweise entlang mindestens einer Richtung, vorzugsweise mindestens zwei Richtungen, vorzugsweise mindestens drei Richtungen. Alternativ kann die Schlauchverlegevorrichtung 10 eine stationäre Einheit sein. Alternativ, oder zusätzlich, können einzelne Komponenten der Schlauchverlegevorrichtung 10 verfahrbar und/oder bewegbar sein, beispielsweise entlang mindestens einer Richtung, vorzugsweise mindestens zwei Richtungen, vorzugsweise mindestens drei Richtungen.

Die Befestigungselement-Zuführvorrichtung 28 kann mindestens eine Befestigungselement-Greifvorrichtung 34 aufweisen, die dazu eingerichtet sein kann, das Befestigungselement 30 zu greifen und an dem Schlauch 12 und/oder dem Panel 14 zu positionieren.

Die Befestigungselement-Zuführvorrichtung 28 kann mindestens eine Rutsche 38 aufweisen, die gegenüber einer horizontalen Ebene geneigt ist. Die Rutsche 38 kann dazu eingerichtet sein, das Befestigungselement 30 zumindest teilweise aufzunehmen und durch Schwerkrafteinwirkung zumindest teilweise zum Schlauch 12 zuzuführen.

Die Rutsche 38 kann dazu eingerichtet sein, eine Mehrzahl von Befestigungselementen 30, vorzugsweise mindestens drei Befestigungselemente 30, vorzugsweise mindestens fünf Befestigungselemente 30, vorzugsweise mindestens zehn Befestigungselemente 30, vorzugsweise mindestens 15 Befestigungselemente 30, vorzugsweise mindestens 20 Befestigungselemente 30, vorzugsweise mindestens 25 Befestigungselemente 30, vorzugsweise mindestens 30 Befestigungselemente 30, zumindest teilweise aufzunehmen. Die Rutsche 38 kann dazu eingerichtet sein, die Befestigungselemente 30 in Reihe und/oder als Stapel zumindest teilweise aufzunehmen.

Die Schlauchverlegevorrichtung 10, insbesondere die Befestigungselement-Zuführvorrichtung 28, insbesondere die Rutsche 38, kann dazu eingerichtet sein, das Befestigungselement 30 der Greifvorrichtung 18 bereitzustellen, beispielsweise indem die Schlauchverlegevorrichtung 10, insbesondere die Befestigungselement-Zuführvorrichtung 28, insbesondere die Rutsche 38, das Befestigungselement 30 in eine vorgelagerte Position bringt, in der Befestigungselement 30 durch die Greifvorrichtung 18 greifbar ist. Die Greifvorrichtung 18 kann das Befestigungselement 30, beispielsweise aus der vorgelagerten Position, entnehmen und, beispielsweise mittels eines Zylinders 39, beispielsweise eines Hubzylinders 39, über den und/oder zum Schlauch 12 transportieren.

Die Rutsche 38 kann mindestens einen Führungsstab 40 aufweisen, entlang dessen das Befestigungselement 30 führend gleitbar ist. Der Führungsstab 40 kann teilweise gebogen sein, vorzugsweise in einer vertikal verlaufenden Ebene.

Die Rutsche 38 kann eine Mehrzahl des mindestens einen Führungsstabs 40 aufweisen. Mindestens ein erster Führungsstab 40A der Führungsstäbe 40 kann dazu eingerichtet sein, in mindestens einem Hohlraum des Befestigungselements 30 aufgenommen zu werden, um den ersten Führungsstab 40A an mindestens einer Innenfläche des Befestigungselements 30 zu führen. Mindestens ein zweiter Führungsstab 40B der Führungsstäbe 40 kann dazu eingerichtet sein, das Befestigungselement 30 an mindestens einer Außenfläche des Befestigungselements 30 zu führen.

Die Rutsche 38 kann mindestens ein Orientierungsmerkmal 50 aufweisen, das dazu eingerichtet sein kann, das Befestigungselement 30 in mindestens eine vorbestimmte Soll-Orientierung zu positionieren und/oder ein Bewegen des Befestigungselements 30 entlang der Rutsche 38 nur dann zuzulassen, wenn das Befestigungselement 30 in einer vorbestimmten Soll-Orientierung positioniert ist. Das Orientierungsmerkmal 50 kann eine Öffnung sein und/oder aufweisen. Die Öffnung 50 kann zumindest abschnittsweise eine Kontur und/oder eine Geometrie aufweisen, die an eine Kontur und/oder Geometrie des Befestigungselements 30 angepasst ist und/oder einer Kontur und/oder Geometrie des Befestigungselements 30 entspricht.

Die Greifvorrichtung 18 kann einen ersten Greifer 54 und mindestens einen zweiten Greifer 56 aufweisen. Der erste Greifer 54 und der zweite Greifer 56 können jeweils dazu eingerichtet sein, den Schlauch 12 zu greifen. Der erste Greifer 54 und der zweite Greifer 56 können entlang des Schlauchs 12 voneinander beabstandet angeordnet sein, zumindest wenn der Schlauch 12 von dem ersten Greifer 54 und dem zweiten Greifer 56 gegriffen wird.

Der erste Greifer 54 und der zweite Greifer 56 können jeweils zwei voneinander beabstandete Greifbacken 60, 62 aufweisen. Die Greifbacken 60, 62 können dazu eingerichtet sein, den Schlauch 12 zwischen den Greifbacken 60, 62 des ersten Greifers 54 bzw. des zweiten Greifers 56 klemmend zu greifen. Vorzugsweise ist ein maximal einstellbarer Abstand der Greifbacken 60 des ersten Greifers 54 zueinander größer als ein maximal einstellbarer Abstand der Greifbacken 62 des zweiten Greifers 56 zueinander.

Der Abstand zwischen den Greifbacken 60 des ersten Greifers 54 und/oder der Abstand zwischen den Greifbacken 62 des zweiten Greifers 56 kann/können variabel einstellbar sein, vorzugsweise derart, dass der Abstand zwischen den Greifbacken 60 des ersten Greifers 54 und der Abstand zwischen den Greifbacken 62 des zweiten Greifers 56 unterschiedlich einstellbar sind, vorzugsweise zumindest wenn der Schlauch 12 zwischen den Greifbacken 60 des ersten Greifers 54 und den Greifbacken 62 des zweiten Greifers 56 angeordnet ist und der Schlauch 12 nicht durch den ersten Greifer 54 und den zweiten Greifer 56 gegriffen wird. Der erste Greifer 54 kann in Zuführrichtung 11 des Schlauchs 12 zum Panel und/oder zum Schlauch 12 hin vor dem zweiten Greifer 56 angeordnet sein.

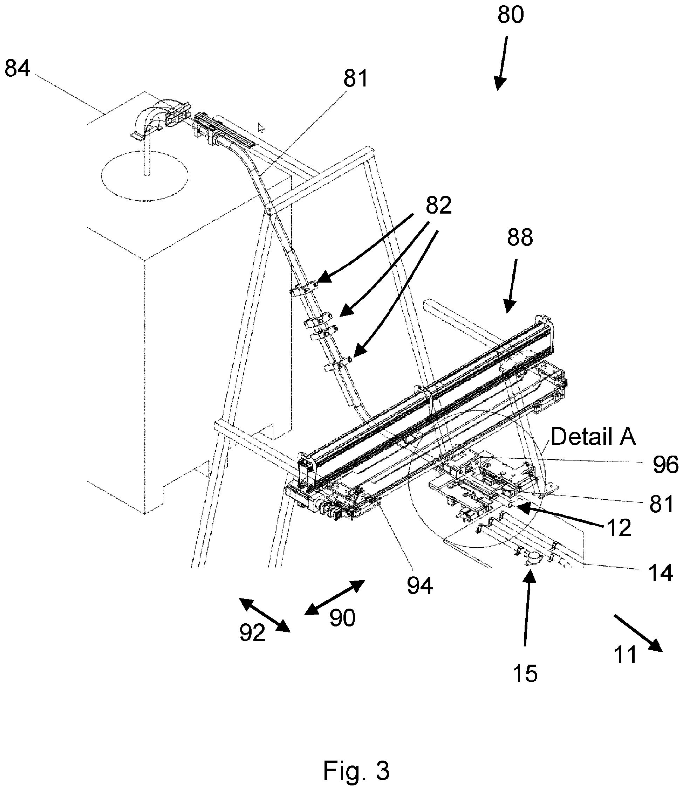

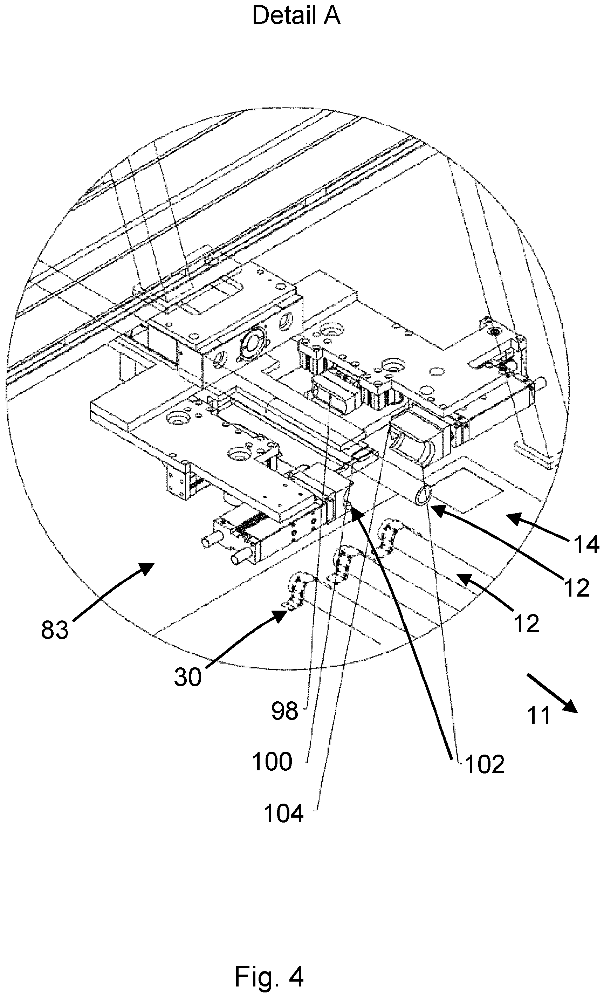

Die Schlauchverlegevorrichtung 10 kann eine Schlauch-Zuführvorrichtung 80 aufweisen (siehe Fig. 3 und 4), die dazu eingerichtet sein kann, den Schlauch 12 zum Panel oder in Richtung des Panels und/oder zur Greifvorrichtung 18 oder in Richtung der Greifvorrichtung 18 zuzuführen.

Die Schlauch-Zuführvorrichtung 80 kann dazu eingerichtet sein, den Schlauch 12 aus einem Vorratsbehälter 84 zu entnehmen, in dem der Schlauch 12, vorzugsweise mehrere Schläuche und/oder mindestens ein in mehrere Schläuche unterteilbarer kontinuierlicher Schlauch 12, aufgenommen ist, und zum Panel oder in Richtung des Panels 14 und/oder zur Greifvorrichtung 18 oder in Richtung der Greifvorrichtung 18 zuzuführen.

Die Schlauch-Zuführvorrichtung 80 kann mindestens eine Führungsstrecke 81 aufweisen, entlang welcher der Schlauch 12 zumindest teilweise zum Panel 14 zuführbar ist. Die Zuführstrecke 81 kann gegenüber einer horizontalen Ebene geneigt ist. Die Führungsstrecke 81 kann mindestens ein Führungselement 82 aufweisen. Das Führungselement 82 kann dazu eingerichtet sein, den Schlauch 12 zumindest abschnittsweise zu führen und/oder umzulenken.

Die Schlauch-Zuführvorrichtung 80 kann eine Klemmeinrichtung 83 aufweisen, die dazu eingerichtet sein kann, den Schlauch 12 klemmend zu greifend.

Die Schlauch-Zuführvorrichtung 80 kann mindestens eine Positioniereinrichtung 88 aufweisen, die dazu eingerichtet sein kann, den Schlauch 12, insbesondere die Klemmeinrichtung 83, insbesondere in einem Zustand, in dem die Klemmeinrichtung 83 den Schlauch klemmend greift, entlang zumindest einer Achse 90, vorzugsweise entlang von mindestens zwei Achsen 90, 92, zu positionieren, insbesondere durch translatorische und/oder rotatorische Bewegungen, insbesondere der Klemmeinrichtung 83, vorzugsweise relativ zum Panel 14 und/oder der Greifvorrichtung 18. Eine erste Achse 90 kann sich im Wesentlichen quer zur Längsachse der Schlauchs 12 und/oder des Panels 12 erstrecken und/oder eine zweite Achse 92 kann sich im Wesentlichen entlang der Längsachse der Schlauchs 12 und/oder des Panels 12 erstrecken.

Die Positioniereinrichtung 88 kann mindestens einen ersten Positioniermechanismus 94 aufweisen, der dazu eingerichtet sein kann, den Schlauch 12 entlang der Achse 90 zu bewegen/positionieren. Die Positioniereinrichtung 88 kann mindestens einen zweiten Positioniermechanismus 96 aufweisen, der dazu eingerichtet sein kann, den Schlauch 12 entlang der Achse 92 zu bewegen/positionieren. Der Positioniermechanismus 94 und/oder der Positioniermechanismus 96 kann/können als Lineareinheit(en) ausgebildet sein.

Fig. 4 zeigt, in einer schematischen und vergrößerten Ansicht, das in Fig. 3 gezeigte "Detail A" der Schlauch-Zuführvorrichtung 80. Wie in Fig. 4 gezeigt, kann die Klemmeinrichtung 83 eine erste Klemmvorrichtung 98 und eine zweite Klemmvorrichtung 100 aufweisen, die jeweils dazu eingerichtet sein können, den Schlauch 12 klemmend zu greifen. Die zweite Klemmvorrichtung 100 kann dazu eingerichtet sein, den Schlauch 12 klemmend zu greifen, um den Schlauch 12 zum Panel 14 und/oder zur Greifvorrichtung 18 zu transportieren, beispielsweise durch Bewegen der Klemmeinrichtung 83, vorzugsweise nur wenn der Schlauch 12 zum Panel 12 und/oder zur Greifvorrichtung 18 transportiert wird bzw. transportiert werden soll. Die erste Klemmvorrichtung 98 kann zwischen einer geschlossenen Stellung, in welcher der Schlauch 12 von der ersten Klemmvorrichtung 98 klemmend greifbar ist oder klemmend gegriffen wird, und einer geöffneten Stellung, in welcher der Schlauch 12 nicht von der ersten Klemmvorrichtung 98 klemmend greifbar ist oder klemmend gegriffen wird, verstellbar sein. Die erste Klemmvorrichtung 98 kann dazu eingerichtet sein, in der geöffneten Stellung der ersten Klemmvorrichtung 98 den Schlauch 12 zumindest abschnittsweise zu führen.

Die Schlauch-Zuführvorrichtung 80 kann mindestens eine Trennvorrichtung 104 aufweisen, die dazu eingerichtet sein kann, den Schlauch 12 von mindestens einem benachbarten Schlauchabschnitt zu trennen. Die Trennvorrichtung 104 kann hinter der ersten Klemmvorrichtung 98 und/oder der zweiten Klemmvorrichtung 100 angeordnet sein, in Richtung des Panels 14 und/oder in Zuführrichtung 11. Dadurch kann/können die erste Klemmvorrichtung 98 und/oder die zweite Klemmvorrichtung 100 dazu dienen, den Schlauch 12 zu greifen, so dass der abgetrennte Abschnitt des Schlauchs 12 zum Panel 14 bewegbar ist, während der übrige Abschnitt des Schlauchs 12 vor der Trennvorrichtung 104 festgehalten werden kann.

Wie in Fig. 4 dargestellt, kann die Schlauchverlegevorrichtung 10 dazu eingerichtet sein, mehrere Schläuche 12 in Reihe und/oder parallel zueinander an dem Panel 14 zu verlegen, vorzugsweise zu befestigen.

Die Schlauch-Zuführvorrichtung 80 kann mindestens eine Führungsvorrichtung 102 aufweisen. Die Führungsvorrichtung 102 kann hinter der Klemmeinrichtung 83 und der Trennvorrichtung 104 angeordnet sein, in Richtung des Panels 14 und/oder in Zuführrichtung 11. Die Führungsvorrichtung 102 kann zwischen einer geschlossenen Stellung, in welcher der Schlauch 12 durch die Führungsvorrichtung 102 führbar ist, insbesondere wenn der Schlauch 12 durch die Schlauchverlegevorrichtung 10, insbesondere durch die Greifvorrichtung 18, gezogen wird, und einer geöffneten Stellung verstellbar sein.

## Patentansprüche

1. Schlauchverlegevorrichtung (10) zum Verlegen mindestens eines Schlauchs (12) an mindestens einem Panel (14), wobei der Schlauch (12) zum Aufnehmen von elektrischen Leitungen geeignet ist, wobei die Schlauchverlegevorrichtung (10) aufweist:
mindestens eine Greifvorrichtung (18), die dazu eingerichtet ist, den Schlauch (12) zu greifen;
mindestens eine Bewegungsvorrichtung (22), die dazu eingerichtet ist, die Greifvorrichtung (18) in mindestens eine Richtung (24) zu bewegen, um eine Position des Schlauchs (12) an dem Panel einzustellen.

2. Schlauchverlegevorrichtung (10) nach Anspruch 1, zusätzlich aufweisend mindestens eine Befestigungselement-Zuführvorrichtung (28), die dazu eingerichtet ist, mindestens ein Befestigungselement (30), das zum Befestigen des Schlauchs (12) an dem Panel eingerichtet ist, zum Schlauch (12) und/oder zur Greifvorrichtung (18) zuzuführen.

3. Schlauchverlegevorrichtung (10) nach Anspruch 2, wobei die Befestigungselement-Zuführvorrichtung (28) mindestens eine Befestigungselement-Greifvorrichtung (34) aufweist, die dazu eingerichtet ist, das Befestigungselement (30) zu greifen und an dem Schlauch (12) und/oder dem Panel zu positionieren.

4. Schlauchverlegevorrichtung (10) nach Anspruch 2 oder 3, wobei die Befestigungselement-Zuführvorrichtung (28) mindestens eine Rutsche (38) aufweist, die gegenüber einer horizontalen Ebene geneigt ist und dazu eingerichtet ist, das Befestigungselement (30) zumindest teilweise aufzunehmen und durch Schwerkrafteinwirkung zumindest teilweise zum Schlauch (12) zuzuführen.

5. Schlauchverlegevorrichtung (10) nach Anspruch 4, wobei die Rutsche (38) mindestens einen Führungsstab (40) aufweist, entlang dessen das Befestigungselement (30) führend gleitbar ist.

6. Schlauchverlegevorrichtung (10) nach Anspruch 5, wobei die Rutsche (38) eine Mehrzahl des mindestens einen Führungsstabs (40) aufweist, wobei mindestens ein erster Führungsstab (40A) der Führungsstäbe (40) dazu eingerichtet ist, in mindestens einem Hohlraum des Befestigungselements (30) aufgenommen zu werden, um den ersten Führungsstab (40A) an mindestens einer Innenfläche des Befestigungselements (30) zu führen, und wobei mindestens ein zweiter Führungsstab (40B) der Führungsstäbe (40) dazu eingerichtet ist, das Befestigungselement (30) an mindestens einer Außenfläche des Befestigungselements (30) zu führen.

7. Schlauchverlegevorrichtung (10) nach einem der Ansprüche 4 bis 6, wobei die Rutsche (38) mindestens ein Orientierungsmerkmal (50) aufweist, das dazu eingerichtet ist:
das Befestigungselement (30) in mindestens eine vorbestimmte Soll-Orientierung zu positionieren;
und/oder
ein Bewegen des Befestigungselements (30) entlang der Rutsche (38) nur dann zuzulassen, wenn das Befestigungselement (30) in einer vorbestimmten Soll-Orientierung positioniert ist,
wobei das Orientierungsmerkmal (50) eine Öffnung ist und/oder aufweist, wobei die Öffnung (50) zumindest abschnittsweise eine Kontur und/oder eine Geometrie aufweist, die an eine Kontur und/oder Geometrie des Befestigungselements (30) angepasst ist und/oder einer Kontur und/oder Geometrie des Befestigungselements (30) entspricht.

8. Schlauchverlegevorrichtung (10) nach einem der vorhergehenden Ansprüche, wobei die Greifvorrichtung (18) einen ersten Greifer (54) und mindestens einen zweiten Greifer (56) aufweist, wobei der erste Greifer (54) und der zweite Greifer (56) jeweils dazu eingerichtet sind, den Schlauch (12) zu greifen, wobei der erste Greifer (54) und der zweite Greifer (56) entlang des Schlauchs (12) voneinander beabstandet angeordnet sind, zumindest wenn der Schlauch (12) von dem ersten Greifer (54) und dem zweiten Greifer (56) gegriffen wird, wobei der erste Greifer (54) und der zweite Greifer (56) jeweils zwei voneinander beabstandete Greifbacken (60, 62) aufweisen, wobei die Greifbacken (60, 62) dazu eingerichtet sind, den Schlauch (12) zwischen den Greifbacken (60, 62) des ersten Greifers (54) bzw. des zweiten Greifers (56) klemmend zu greifen, vorzugsweise wobei ein maximal einstellbarer Abstand der Greifbacken (60) des ersten Greifers (54) zueinander größer ist als ein maximal einstellbarer Abstand der Greifbacken (62) des zweiten Greifers (56) zueinander.

9. Schlauchverlegevorrichtung (10) nach Anspruch 8, wobei ein Abstand zwischen den Greifbacken (60) des ersten Greifers (54) und/oder ein Abstand zwischen den Greifbacken (62) des zweiten Greifers (56) variabel einstellbar ist/sind, insbesondere derart, dass der Abstand zwischen den Greifbacken (60) des ersten Greifers (54) und der Abstand zwischen den Greifbacken (62) des zweiten Greifers (56) unterschiedlich einstellbar sind, zumindest wenn der Schlauch (12) zwischen den Greifbacken (60) des ersten Greifers (54) und den Greifbacken (62) des zweiten Greifers (56) angeordnet ist und der Schlauch (12) nicht durch den ersten Greifer (54) und den zweiten Greifer (56) gegriffen wird.

10. Schlauchverlegevorrichtung (10) nach Anspruch 8 oder 9, wobei der erste Greifer (54) in Zuführrichtung (11) des Schlauchs (12) zum Panel (14) und/oder zum Schlauch (12) hin vor dem zweiten Greifer (56) angeordnet ist.

11. Schlauchverlegevorrichtung (10) nach einem der vorhergehenden Ansprüche, zusätzlich aufweisend eine Schlauch-Zuführvorrichtung (80), die dazu eingerichtet ist, den Schlauch (12) zum Panel (14) und/oder zur Greifvorrichtung (18) zuzuführen.

12. Schlauchverlegevorrichtung (10) nach Anspruch 11, wobei die Schlauch-Zuführvorrichtung (80) dazu eingerichtet ist, den Schlauch (12) aus einem Vorratsbehälter (84) zu entnehmen, in dem der Schlauch (12), vorzugsweise mehrere Schläuche und/oder mindestens ein in mehrere Schläuche unterteilbarer kontinuierlicher Schlauch (12), aufgenommen ist, und zum Panel (14) und/oder zur Greifvorrichtung (18) zuzuführen, und wobei die Schlauch-Zuführvorrichtung (80) mindestens eine Positioniereinrichtung (88) aufweist, die dazu eingerichtet ist, den Schlauch (12) entlang zumindest einer Achse (90, 92), vorzugsweise entlang von mindestens zwei Achsen (90, 92), zu positionieren, vorzugsweise relativ zum Panel (14) und/oder der Greifvorrichtung (18).

13. Eine Schlauch-Zuführvorrichtung (80) zum Zuführen mindestens eines Schlauchs (12) zu einem Panel (14), an dem der Schlauch (12) befestigt werden soll, wobei der Schlauch (12) zum Aufnehmen von elektrischen Leitungen geeignet ist, wobei die Schlauch-Zuführvorrichtung (80) aufweist:
mindestens eine Führungsstrecke (81), entlang welcher der Schlauch (12) zumindest teilweise zum Panel (14) zuführbar ist, wobei die Zuführstrecke (81) gegenüber einer horizontalen Ebene geneigt ist;
mindestens eine Positioniereinrichtung (88), die dazu eingerichtet ist, den Schlauch (12) entlang zumindest einer Achse (90, 92) zu positionieren;
wobei die Schlauch-Zuführvorrichtung (80) dazu eingerichtet ist, den Schlauch (12) aus mindestens einem Schlauchvorrat (84) zu entnehmen.

14. Ein Verfahren zum Verlegen mindestens eines Schlauchs (12) an mindestens einem Panel (14), vorzugsweise mittels der Schlauchverlegevorrichtung (10) nach einem der Ansprüche 1 bis 12, wobei der Schlauch (12) zum Aufnehmen von elektrischen Leitungen geeignet ist, wobei das Verfahren aufweist:
Einstellen, durch mindestens eine Bewegungsvorrichtung (22), einer Position einer Greifvorrichtung (18) an dem Panel (14); und
Greifen des Schlauchs (12) durch die Greifvorrichtung (18).

15. Ein Verfahren zum Zuführen mindestens eines Schlauchs (12) zu einem Panel (14), an dem der Schlauch (12) befestigt werden soll, vorzugsweise mittels der Schlauch-Zuführvorrichtung (80) nach Anspruch 13, wobei der Schlauch (12) zum Aufnehmen von elektrischen Leitungen geeignet ist, wobei das Verfahren aufweist:
Entnehmen des Schlauchs (12) aus mindestens einem Schlauchvorrat (84);
Zuführen des Schlauchs (12) entlang mindestens einer Führungsstrecke (81) zumindest teilweise zum Panel (14), wobei die Zuführstrecke (81) gegenüber einer horizontalen Ebene geneigt ist; und
Positionieren, durch mindestens eine Positioniereinrichtung (88), des Schlauchs (12) entlang zumindest einer Achse (90, 92) zu positionieren.

## Geänderte Patentansprüche

### Geänderte Patentansprüche gemäss Regel 137(2) EPÜ.

1. Schlauchverlegevorrichtung (10) zum Verlegen mindestens eines Schlauchs (12) an mindestens einem Panel (14), wobei der Schlauch (12) zum Aufnehmen von elektrischen Leitungen geeignet ist, wobei die Schlauchverlegevorrichtung (10) aufweist:
mindestens eine Greifvorrichtung (18), die dazu eingerichtet ist, den Schlauch (12) zu greifen;
mindestens eine Bewegungsvorrichtung (22), die dazu eingerichtet ist, die Greifvorrichtung (18) in mindestens eine Richtung (24) zu bewegen, um eine Position des Schlauchs (12) an dem Panel einzustellen;
mindestens eine Befestigungselement-Zuführvorrichtung (28), die dazu eingerichtet ist, mindestens ein Befestigungselement (30), das zum Befestigen des Schlauchs (12) an dem Panel eingerichtet ist, zum Schlauch (12) zuzuführen, wobei die Befestigungselement-Zuführvorrichtung (28) mindestens eine Befestigungselement-Greifvorrichtung (34) aufweist, die dazu eingerichtet ist, das Befestigungselement (30) zu greifen und an dem Schlauch (12) und dem Panel zu positionieren.

2. Schlauchverlegevorrichtung (10) nach Anspruch 1, wobei die Befestigungselement-Zuführvorrichtung (28) mindestens eine Rutsche (38) aufweist, die gegenüber einer horizontalen Ebene geneigt ist und dazu eingerichtet ist, das Befestigungselement (30) zumindest teilweise aufzunehmen und durch Schwerkrafteinwirkung zumindest teilweise zum Schlauch (12) zuzuführen.

3. Schlauchverlegevorrichtung (10) nach Anspruch 2, wobei die Rutsche (38) mindestens einen Führungsstab (40) aufweist, entlang dessen das Befestigungselement (30) führend gleitbar ist.

4. Schlauchverlegevorrichtung (10) nach Anspruch 3, wobei die Rutsche (38) eine Mehrzahl des mindestens einen Führungsstabs (40) aufweist, wobei mindestens ein erster Führungsstab (40A) der Führungsstäbe (40) dazu eingerichtet ist, in mindestens einem Hohlraum des Befestigungselements (30) aufgenommen zu werden, um den ersten Führungsstab (40A) an mindestens einer Innenfläche des Befestigungselements (30) zu führen, und wobei mindestens ein zweiter Führungsstab (40B) der Führungsstäbe (40) dazu eingerichtet ist, das Befestigungselement (30) an mindestens einer Außenfläche des Befestigungselements (30) zu führen.

5. Schlauchverlegevorrichtung (10) nach einem der Ansprüche 2 bis 4, wobei die Rutsche (38) mindestens ein Orientierungsmerkmal (50) aufweist, das dazu eingerichtet ist:
das Befestigungselement (30) in mindestens eine vorbestimmte Soll-Orientierung zu positionieren;
und/oder
ein Bewegen des Befestigungselements (30) entlang der Rutsche (38) nur dann zuzulassen, wenn das Befestigungselement (30) in einer vorbestimmten Soll-Orientierung positioniert ist,
wobei das Orientierungsmerkmal (50) eine Öffnung ist und/oder aufweist, wobei die Öffnung (50) zumindest abschnittsweise eine Kontur und/oder eine Geometrie aufweist, die an eine Kontur und/oder Geometrie des Befestigungselements (30) angepasst ist und/oder einer Kontur und/oder Geometrie des Befestigungselements (30) entspricht.

6. Schlauchverlegevorrichtung (10) nach einem der vorhergehenden Ansprüche, wobei die Greifvorrichtung (18) einen ersten Greifer (54) und mindestens einen zweiten Greifer (56) aufweist, wobei der erste Greifer (54) und der zweite Greifer (56) jeweils dazu eingerichtet sind, den Schlauch (12) zu greifen, wobei der erste Greifer (54) und der zweite Greifer (56) entlang des Schlauchs (12) voneinander beabstandet angeordnet sind, zumindest wenn der Schlauch (12) von dem ersten Greifer (54) und dem zweiten Greifer (56) gegriffen wird, wobei der erste Greifer (54) und der zweite Greifer (56) jeweils zwei voneinander beabstandete Greifbacken (60, 62) aufweisen, wobei die Greifbacken (60, 62) dazu eingerichtet sind, den Schlauch (12) zwischen den Greifbacken (60, 62) des ersten Greifers (54) bzw. des zweiten Greifers (56) klemmend zu greifen, vorzugsweise wobei ein maximal einstellbarer Abstand der Greifbacken (60) des ersten Greifers (54) zueinander größer ist als ein maximal einstellbarer Abstand der Greifbacken (62) des zweiten Greifers (56) zueinander.

7. Schlauchverlegevorrichtung (10) nach Anspruch 6, wobei ein Abstand zwischen den Greifbacken (60) des ersten Greifers (54) und/oder ein Abstand zwischen den Greifbacken (62) des zweiten Greifers (56) variabel einstellbar ist/sind, insbesondere derart, dass der Abstand zwischen den Greifbacken (60) des ersten Greifers (54) und der Abstand zwischen den Greifbacken (62) des zweiten Greifers (56) unterschiedlich einstellbar sind, zumindest wenn der Schlauch (12) zwischen den Greifbacken (60) des ersten Greifers (54) und den Greifbacken (62) des zweiten Greifers (56) angeordnet ist und der Schlauch (12) nicht durch den ersten Greifer (54) und den zweiten Greifer (56) gegriffen wird.

8. Schlauchverlegevorrichtung (10) nach Anspruch 6 oder 7, wobei der erste Greifer (54) in Zuführrichtung (11) des Schlauchs (12) zum Panel (14) und/oder zum Schlauch (12) hin vor dem zweiten Greifer (56) angeordnet ist.

9. Schlauchverlegevorrichtung (10) nach einem der vorhergehenden Ansprüche, zusätzlich aufweisend eine Schlauch-Zuführvorrichtung (80), die dazu eingerichtet ist, den Schlauch (12) zum Panel (14) und/oder zur Greifvorrichtung (18) zuzuführen.

10. Schlauchverlegevorrichtung (10) nach Anspruch 9, wobei die Schlauch-Zuführvorrichtung (80) dazu eingerichtet ist, den Schlauch (12) aus einem Vorratsbehälter (84) zu entnehmen, in dem der Schlauch (12), vorzugsweise mehrere Schläuche und/oder mindestens ein in mehrere Schläuche unterteilbarer kontinuierlicher Schlauch (12), aufgenommen ist, und zum Panel (14) und/oder zur Greifvorrichtung (18) zuzuführen, und wobei die Schlauch-Zuführvorrichtung (80) mindestens eine Positioniereinrichtung (88) aufweist, die dazu eingerichtet ist, den Schlauch (12) entlang zumindest einer Achse (90, 92), vorzugsweise entlang von mindestens zwei Achsen (90, 92), zu positionieren, vorzugsweise relativ zum Panel (14) und/oder der Greifvorrichtung (18).

11. Eine Schlauch-Zuführvorrichtung (80) zum Zuführen mindestens eines Schlauchs (12) zu einem Panel (14), an dem der Schlauch (12) befestigt werden soll, wobei der Schlauch (12) zum Aufnehmen von elektrischen Leitungen geeignet ist, wobei die Schlauch-Zuführvorrichtung (80) aufweist:
einen Schlauchvorrat (84);
mindestens eine Führungsstrecke (81), entlang welcher der Schlauch (12) zumindest teilweise zum Panel (14) zuführbar ist, wobei die Zuführstrecke (81) gegenüber einer horizontalen Ebene geneigt ist;
mindestens eine Positioniereinrichtung (88), die dazu eingerichtet ist, den Schlauch (12) entlang zumindest einer Achse (90, 92) zu positionieren;
wobei die Schlauch-Zuführvorrichtung (80) dazu eingerichtet ist, den Schlauch (12) aus dem Schlauchvorrat (84) zu entnehmen.

12. Ein Verfahren zum Verlegen mindestens eines Schlauchs (12) an mindestens einem Panel (14), vorzugsweise mittels der Schlauchverlegevorrichtung (10) nach einem der Ansprüche 1 bis 10, wobei der Schlauch (12) zum Aufnehmen von elektrischen Leitungen geeignet ist, wobei das Verfahren aufweist:
Einstellen, durch mindestens eine Bewegungsvorrichtung (22), einer Position einer Greifvorrichtung (18) an dem Panel (14); und
Greifen des Schlauchs (12) durch die Greifvorrichtung (18);
wobei mindestens eine Befestigungselement-Zuführvorrichtung (28) mindestens ein Befestigungselement (30), das zum Befestigen des Schlauchs (12) an dem Panel eingerichtet ist, zum Schlauch (12) zuführt, wobei die Befestigungselement-Zuführvorrichtung (28) mindestens eine Befestigungselement-Greifvorrichtung (34) aufweist, die dazu eingerichtet ist, das Befestigungselement (30) zu greifen und an dem Schlauch (12) und dem Panel zu positionieren.

13. Ein Verfahren zum Zuführen mindestens eines Schlauchs (12) zu einem Panel (14), an dem der Schlauch (12) befestigt werden soll, vorzugsweise mittels der Schlauch-Zuführvorrichtung (80) nach Anspruch 11, wobei der Schlauch (12) zum Aufnehmen von elektrischen Leitungen geeignet ist, wobei das Verfahren aufweist:
Entnehmen des Schlauchs (12) aus mindestens einem Schlauchvorrat (84);
Zuführen des Schlauchs (12) entlang mindestens einer Führungsstrecke (81) zumindest teilweise zum Panel (14), wobei die Zuführstrecke (81) gegenüber einer horizontalen Ebene geneigt ist; und
Positionieren, durch mindestens eine Positioniereinrichtung (88), des Schlauchs (12) entlang zumindest einer Achse (90, 92) zu positionieren.
